# FASCICULE DE BREVET EUROPEEN

(11) **EP 2 361 491 B1**
(45) Date de publication et mention de la délivrance du brevet: **16.01.2019**
(21) Numéro de dépôt: 11154787.3
(22) Date de dépôt: 17.02.2011
(51) Int. Cl.: A01B 73/04, A01C 7/20

(54) **Semoir avec dispositifs de réglage à encombrement réduit**
Sämaschine mit Einstellvorrichtungen mit verringertem Raumbedarf
Seed drill with adjusting devices with reduced space requirement

(30) Priorité: 25.02.2010 FR 1051357
(43) Date de publication de la demande: 31.08.2011
(73) Titulaire: KUHN S.A., 67700 Saverne (FR)
(72) Inventeur: Seemann, Michel, 57370, Phalsbourg (FR); Rui, Pascal, 67370, Kleinfrankenheim (FR)

(56) Documents cités:
- EP-A1- 1 634 489
- WO-A1-2006/031182
- DE-A1- 19 534 740
- DE-A1- 19 644 751
- DE-A1- 19 954 423

## Description

La présente invention se rapporte au domaine technique général du machinisme agricole. L'invention concerne un semoir comprenant un châssis, un organe de référence et une barre de semis reliée à l'organe de référence à l'aide d'au moins une structure de liaison présentant une bielle supérieure avec une première et deuxième articulations et une bielle inférieure avec une troisième et quatrième articulations, lesdites articulations respectives formant un quadrilatère déformable, le dispositif de réglage de la profondeur de semis et le dispositif de réglage du terrage agissant sur ladite structure de liaison.

Un tel semoir présentant un châssis, un organe de référence et une barre de semis est connu par le document DE 196 44 751**.** La barre de semis est montée sur l'organe de référence via une structure de liaison. Pour un semis à une profondeur optimale en fonction du sol et de la graine, la position de la barre de semis par rapport à l'organe de référence doit être adaptée. Pour ces réglages, sont utilisés un dispositif permettant le réglage de la profondeur de semis et un dispositif permettant le réglage du terrage. La structure de liaison présente des bielles formant un quadrilatère déformable. Le réglage de la profondeur de semis est un réglage individuel de chaque roulette de guidage par rapport à l'élément semeur correspondant de la barre de semis. Le réglage du terrage est, quant à lui, centralisé. Le dispositif de réglage du terrage agit sur la structure de liaison.

Sur une telle barre de semis avec un nombre important d'éléments semeurs, le temps de réglage de la profondeur de semis est donc long. Il est également prévu un réglage centralisé de la profondeur de semis avec un dispositif de réglage de profondeur agissant sur la structure de liaison. Lors des manoeuvres en bout de champ, il est indispensable de soulever les éléments semeurs et la roulette de guidage pour qu'ils ne ripent pas au sol. Sur ce semoir, le dégagement de la barre de semis par rapport au sol n'est pas suffisant pour écarter les éléments semeurs du sol et pour ne pas les endommager. Ainsi, c'est tout le semoir qui doit être relevé.

Le document WO 2006/031182 divulgue une barre de semis reliée au châssis via une structure de liaison présentant une bielle supérieure et bielle inférieure. Le du dégagement de la barre de semis pour les fins de champ est réalisé grâce au dispositif de réglage du terrage. Ainsi, les réglages préalables appliqués à la barre de semis ne sont pas retrouvés pour reprendre le travail.

La présente invention a pour but de remédier aux inconvénients précités. Elle doit notamment proposer un semoir selon la revendication 1 avec un encombrement limité et un porte-à-faux réduit. Le semoir de l'invention doit permettre un grand dégagement de la barre de semis sans modification du réglage de travail de la barre de semis.

A cet effet, une importante caractéristique de l'invention consiste en ce que ladite structure de liaison pivote autour d'une articulation transversale au moyen d'un basculeur permettant le dégagement de ladite barre de semis du sol et que lesdits dispositifs de réglage et ledit basculeur soient implantés de manière à s'étendre dans l'encombrement de ladite structure de liaison. Grâce à ces caractéristiques, la barre de semis peut être suffisamment dégagée du sol pour les manoeuvres en bout de champ car elle pivote autour de l'articulation transversale. Le semoir est plus compact puisque sa longueur et son porte-à-faux sont réduits.

D'autres caractéristiques et avantages de l'invention se dégageront de la description qui va suivre en regard des dessins annexés qui ne sont donnés qu'à titre d'exemples non limitatifs de l'invention avec référence. Sur ces dessins :
- la **figure 1** représente, en vue de côté, un semoir selon la présente invention avec une profondeur de travail importante,
- la **figure 2** représente une vue de côté d'une machine combinée selon l'invention avec une profondeur de travail limitée,
- la **figure 3** représente une vue de côté de la machine de la figure 2 avec la barre de semis dégagée du sol.

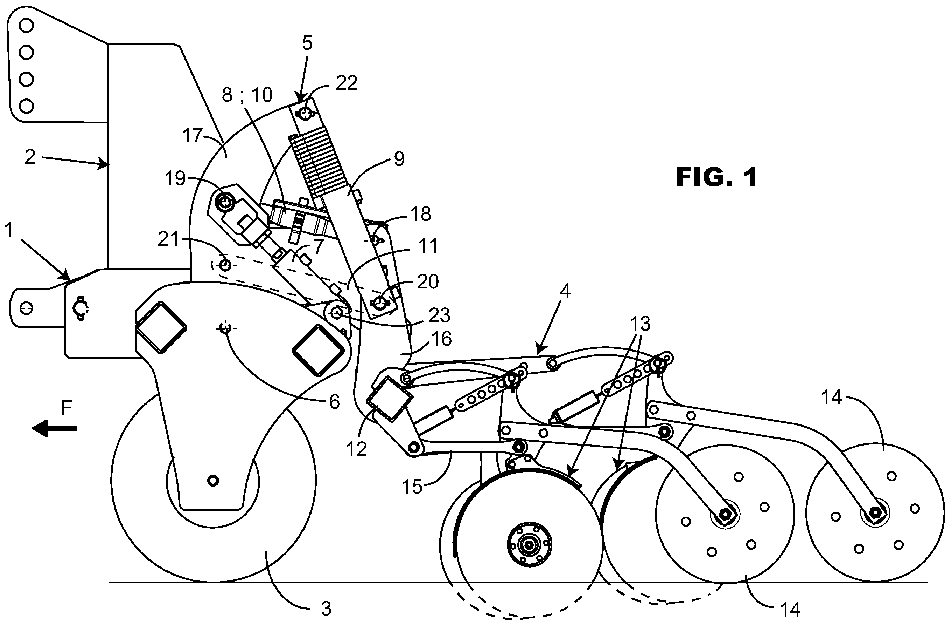

La machine agricole selon l'invention représentée à la figure 1 est un semoir (1). Ce semoir (1) comprend un châssis (2), un organe de référence (3) et une barre de semis (4). Le châssis (2) est pourvu d'un système d'attelage trois points permettant d'accrocher le semoir (1) au relevage d'un tracteur (non représenté). Le tracteur déplace et anime le semoir (1) suivant un sens d'avance indiqué par la flèche (F). L'organe de référence (3) est porté directement par le châssis (2). La barre de semis (4) est reliée à l'organe de référence (3) à l'aide d'une structure de liaison (5). Cette structure de liaison (5) autorise à la barre de semis (4) de se déplacer en hauteur par rapport à l'organe de référence (3). L'organe de référence (3) est composé d'une série de roues. La structure de liaison (5) s'étend par exemple dans la partie médiane du semoir (1). De préférence, une telle structure de liaison (5) s'étend au niveau des deux extrémités de l'organe de référence (3) qui présente une largeur d'environ 3 mètres. Chaque structure de liaison (5) est constituée de bielles (10, 11) articulées formant un quadrilatère déformable dans un plan d'extension sensiblement vertical et sensiblement dirigé dans la direction d'avance (F).

Pour une levée rapide et homogène des graines dans un champ, le placement des graines en profondeur est essentiel. Le semoir (1) est amené à semer différents types de graines dans des conditions variées de terrain. Pour s'adapter à ces conditions, le semoir (1) présente un dispositif de réglage de la profondeur de semis (8) et un dispositif de réglage du terrage (9). Le terrage, c'est la pression de la barre de semis (4) au sol. Ces dispositifs de réglage (8, 9) agissent sur la structure de liaison (5) pour modifier le fonctionnement ou l'état de la barre de semis (4).

Selon une importante caractéristique de l'invention, la structure de liaison (5) est susceptible de pivoter autour d'une articulation transversale (6) au moyen d'un basculeur (7) pour dégager la barre de semis (4) du sol et les dispositifs de réglage (8, 9) et le basculeur (7) sont implantés de manière à s'étendre dans l'encombrement de la structure de liaison (5). Ainsi, le semoir (1) est avantageusement compact. L'implantation dans un espace réduit apporte un gain de poids et une réduction du porte-à-faux du semoir. D'autre part, lorsque la barre de semis (4) pivote autour de l'articulation transversale (6) pour les manoeuvres, la longueur du semoir (1) est réduite ce qui permet de réduire les fourrières.

La structure de liaison (5) est montée sur l'organe de référence (3) au moyen de l'articulation transversale (6) d'axe sensiblement horizontale et perpendiculaire à la direction d'avance (F). La barre de semis (4) est dégagée du sol en pivotant autour de l'articulation transversale (6) via le basculeur (7). Le basculeur (7) est avantageusement un vérin hydraulique.

Selon une autre importante caractéristique, lorsque ledit basculeur (7) pivote autour de ladite articulation transversale (6) pour le dégagement de ladite barre de semis (4) du sol, les réglages dudit dispositif de réglage de la profondeur de semis (8) et ledit dispositif de réglage du terrage (9) ne sont pas modifiés. Grâce au basculeur (7), les éléments semeurs (13) de la barre de semis (4) retrouvent exactement les mêmes caractéristiques pour la profondeur et le terrage qu'avant le dégagement. Les réglages quant à la profondeur de travail et au terrage attribués par les dispositifs de réglage (8, 9) ne sont pas altérés. Le fonctionnement du semoir reste donc identique après chaque manoeuvre en bout de champ.

La barre de semis (4) est constituée d'une traverse (12) s'étendant transversalement à la direction d'avance (F) qui supporte des éléments semeurs (13). L'élément semeur (13) est constitué d'un double disque. Les deux disques sont décalés par rapport à la direction d'avance (F). L'élément semeur (13) réalise un sillon à une profondeur déterminée pour y placer les graines. Il est associé à une roulette de guidage (14). Chaque élément semeur (13) est lié à la traverse (12) au moyen d'un parallélogramme déformable (15). Cette cinématique assure à l'élément semeur (13) une plage de débattement verticale importante pour s'adapter aux dénivellations du sol et/ou s'esquiver à la rencontre d'un obstacle. Le réglage de la profondeur de semis des éléments semeurs (13) est réalisé au moyen du dispositif de réglage de profondeur (8). La profondeur de semis est déterminée par la position des roulettes de guidage (14) par rapport aux disques des éléments semeurs (13). Selon une alternative, non représentée, l'élément semeur (13) est constitué d'un disque unique ou d'un soc. Les éléments semeurs (13) du semoir (1) de la figure 1 sont approvisionnés en graines par l'intermédiaire d'une trémie frontale (non représentée). Les tuyaux d'acheminement des graines ne sont pas représentés sur les figures.

A la lumière de la figure 1, la traverse (12) de la barre de semis (4) se prolonge vers le haut par au moins deux montants (16) sur lesquels sont articulées les bielles (10, 11) par leur extrémité arrière respective. L'extrémité avant de chaque bielle (10, 11) est articulée sur l'organe de référence (3) ou sur une pièce solidaire de l'organe de référence (3). La structure de liaison (5) présente aussi un bras incurvé (17) lié à l'organe de référence (3) via l'articulation transversale (6). Le bras incurvé (17) est avantageusement vertical. Un bras incurvé (17) s'étend latéralement de part et d'autre des bielles (10, 11). La bielle supérieure (10) est liée d'une part aux montants (16) par une première articulation (18) d'axe sensiblement horizontal et perpendiculaire à la direction d'avance (F) et est liée d'autre part aux bras incurvés (17) par une deuxième articulation (19) d'axe sensiblement horizontal et perpendiculaire à la direction d'avance (F). La bielle inférieure (11) est liée d'une part aux montants (16) par une troisième articulation (20) d'axe sensiblement horizontal et perpendiculaire à la direction d'avance (F) et est liée d'autre part aux bras incurvés (17) par une quatrième articulation (21) d'axe sensiblement horizontal et perpendiculaire à la direction d'avance (F). Les articulations (18, 19, 20, 21) forment avantageusement un quadrilatère déformable. Dans l'exemple de réalisation, la bielle supérieure (10) est avantageusement réalisée par le dispositif de réglage de profondeur (8). Ce dernier permet un réglage de la profondeur de semis. Le dispositif de réglage de profondeur (8) s'étend entre la première et la deuxième articulations (18, 19) et est réalisé avec un tirant réglable en longueur sur la figure 1.

Le dispositif de réglage du terrage (9) est lié d'une part à la troisième articulation (20) et d'autre part au bras incurvé (17) via une cinquième articulation (22) d'axe sensiblement horizontal et perpendiculaire à la direction d'avance (F). Cette cinquième articulation (22) s'étend au-dessus des bielles (10, 11) et de préférence à mi-distance entre la première articulation (18) et la deuxième articulation (19). Le bras incurvé (17) porte l'articulation transversale (6), la quatrième articulation (21), la deuxième articulation (19) et la cinquième articulation (22). La cinquième articulation (22) s'étend à une extrémité du bras incurvé (17) et l'autre extrémité réalise une butée.

Le basculeur (7) est accroché d'une part à la deuxième articulation (19) et d'autre part à une sixième articulation (23) d'axe sensiblement horizontal et perpendiculaire à la direction d'avance (F). Le basculeur (7) s'étend entre la deuxième articulation (19) et une sixième articulation (23) disposée en dessous de la bielle inférieure (11). Les articulations (19, 21, 6) sont avantageusement alignées. La deuxième articulation (19) est disposée au-dessus et à la verticale de l'articulation transversale (6). La quatrième articulation (21) s'étend à mi-distance entre la deuxième articulation (19) et l'articulation transversale (6). Au travail, le vérin du basculeur (7) plaque le bras incurvé (17) en butée contre l'organe de référence (3) et notamment contre une poutre de l'organe de référence (3).

On remarque que la cinquième articulation (22) ainsi que la sixième articulation (23) s'étendent entre les articulations (18, 19, 20, 21) des bielles (10, 11). Ainsi, les dispositifs de réglage (8, 9) et le basculeur (7) s'étendent, tous les trois, dans un espace réduit entre deux plans verticaux passant par lesdites articulations (18, 19, 20, 21).

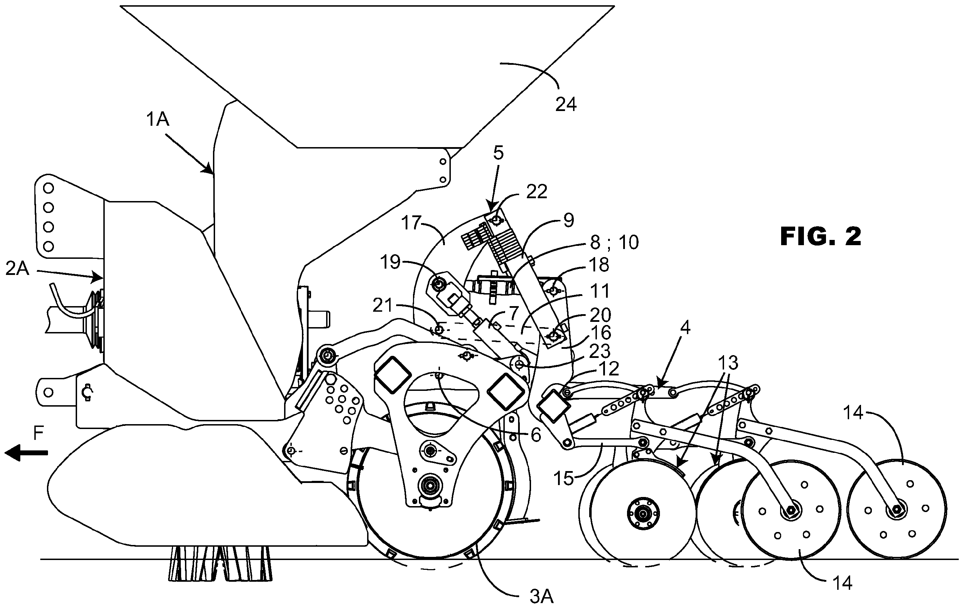

Dans la configuration de la figure 1, le semoir (1) et notamment les éléments semeurs (13) sont positionnés de manière à implanter la graine à une profondeur importante. Sur la figure 2, on constate que les éléments semeurs (13) sont positionnés de manière à implanter la graine à une profondeur moins importante, le semoir réalise plutôt un semis superficiel. Ainsi, pour réduire la profondeur de semis, la longueur de la bielle supérieure (10) ou du dispositif de réglage de profondeur (8) est augmentée. En augmentant cette longueur, la barre de semis (4) pivote dans le sens horaire autour de la troisième articulation (20). A cause du pivotement, les roulettes de guidage (14) s'étendent plus bas que les éléments semeurs car le parallélogramme (15) plonge vers le bas. Pour réaligner les éléments semeurs et les roulettes de guidage (14), il est nécessaire de redresser le parallélogramme (15). Pour cela, la longueur du dispositif de réglage du terrage (9) est réduite jusqu'à ce que la bielle inférieure du parallélogramme (15) soit horizontale par rapport au sol. Le parallélogramme (15) apporte la stabilité pour implanter les graines à la bonne profondeur. La position favorable du parallélogramme (15) est, lorsque sa bielle inférieure est horizontale, parallèle au sol. A l'inverse, pour augmenter la profondeur de semis, la longueur du dispositif de réglage de profondeur (8) est réduite, ce qui fait pivoter la barre de semis (4) dans le sens antihoraire autour de la troisième articulation (20). Les roulettes de guidage (14) sont relevées par rapport aux éléments semeurs. Le dispositif de réglage du terrage (9) est alors allongé pour que la bielle inférieure du parallélogramme (15) soit horizontale par rapport au sol.

D'une manière avantageuse, le réglage de la profondeur de semis et celui du terrage sont réalisés de manière centralisée via un dispositif de réglage (8, 9) correspondant. Dans le cas d'un semoir présentant une largeur de travail de 3 mètres, une structure de liaison (5) s'étend au voisinage de chaque extrémité. Chaque structure de liaison (5) présente un dispositif de réglage de profondeur (8) et un dispositif de réglage du terrage (9). Sur la figure 1, le dispositif de réglage de profondeur (8) est un dispositif mécanique et le dispositif de réglage du terrage (9) est un dispositif hydraulique tel qu'un vérin hydraulique. Ainsi, le réglage de la longueur du dispositif de réglage du terrage (9) se fait à l'aide de cales. Pour obtenir un réglage symétrique de la profondeur de semis et du terrage, il est nécessaire d'effectuer un réglage de longueur identique pour les deux structures de liaison (5). Ce même réglage est effectué pour le vérin hydraulique respectif via le circuit de commande hydraulique. Ainsi, l'un des vérins est maître et l'autre esclave. Dans ce cas, seul le vérin maître présente des cales de réglage. Selon une alternative, non représentée, les dispositifs de réglage (8, 9) sont chacun un dispositif hydraulique permettant un réglage rapide.

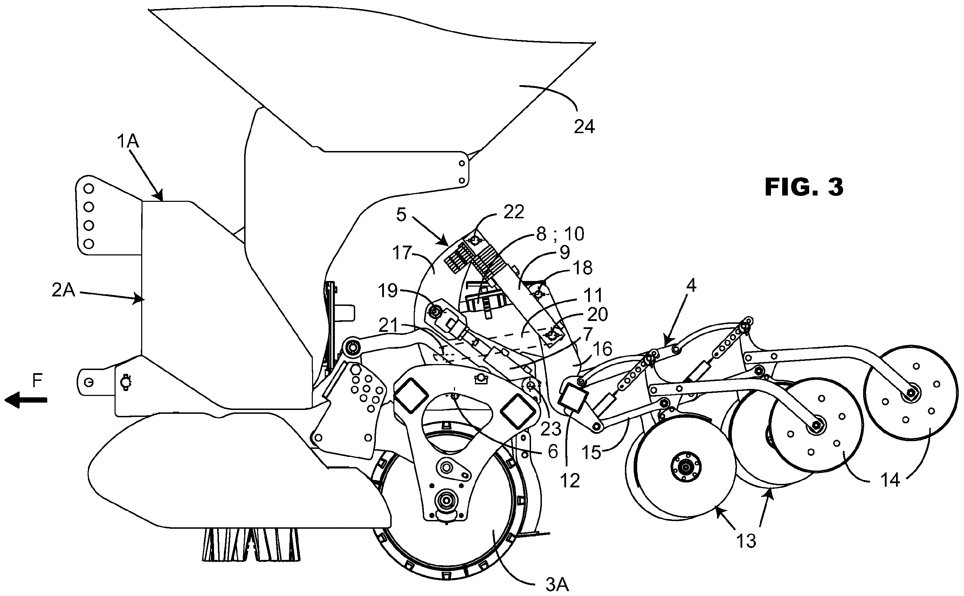

Les figures 2 et 3 représentent un autre exemple de réalisation d'une machine agricole selon l'invention. Cette machine (1A) comporte un certain nombre d'éléments qui ont été décrits précédemment. Ces éléments garderont le même numéro de repère et ne seront pas redécrits. Elle comporte également un certain nombre d'éléments qui sont comparables à des éléments du semoir (1) décrit précédemment. Ces éléments seront affectés du même numéro de repère que ces éléments comparables du semoir (1) suivi de la lettre A. Ils ne seront décrits que si cela s'avère nécessaire. Cette machine (1A) est semblable à celle décrite auparavant. La seule différence réside dans le fait qu'une machine de préparation du lit de semence est disposée devant l'organe de référence.

Il s'agit d'une machine (1A) combinée de travail du sol et de semis. Cette machine combinée (1A) comprend un châssis (2A) pourvu d'outils de travail du sol et un organe de référence (3A) relié au châssis (2A). L'organe de référence (3A) est un rouleau de rappuyage et les outils de travail du sol sont des lames de herse rotative portées par une poutre. Les lames sont entraînées en rotation autour d'axes verticaux via un carter entraîné par la prise de force du tracteur. L'organe de référence (3A) est relié au châssis (2A) à l'aide d'un mécanisme à parallélogramme. Ce dernier permet à la herse rotative d'être dégagée en hauteur parallèlement au sol pour passer un obstacle. L'organe de référence (3A) définit la profondeur de travail pour la herse rotative et celle de la barre de semis (4). Lorsque l'utilisateur agit sur l'organe de référence (3A) pour travailler la terre sur une autre profondeur, il est nécessaire d'effectuer des réglages multiples au niveau du rouleau ainsi qu'au niveau de la barre de semis (4). Comme décrit précédemment, un seul réglage n'est pas suffisant pour conserver la même profondeur de semis et/ou pour garder la même orientation de la barre de semis (4) par rapport au sol. Le fonctionnement et le réglage de la structure de liaison (5) et de la barre de semis (4) sont identiques à la description faite pour la figure 1.

La machine combinée (1A) représentée à la figure 2 présente une trémie (24). Cette trémie (24) s'étend sur le châssis (2A) de la herse rotative. Sur la figure 3, la machine combinée (1A) est représentée dans une position dans laquelle la barre de semis (4) est dégagée du sol pour les manoeuvres en bout de champ. Pour cela, la barre de semis (4) pivote autour de l'articulation transversale (6) au moyen du basculeur (7). Le dégagement des éléments semeurs (13) et des roulettes de guidage (14) est important même lorsque l'organe de référence (3A) est proche du sol.

La machine agricole conforme à l'invention peut être une machine rigide ou une machine repliable en au moins deux parties.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1) comprenant un châssis (2), un organe de référence (3) et une barre de semis (4) reliée à l'organe de référence (3) à l'aide d'au moins une structure de liaison (5) présentant une bielle supérieure (10) avec une première et deuxième articulations (18, 19) et une bielle inférieure (11) avec une troisième et quatrième articulations (20, 21), lesdites articulations (18, 19, 20, 21) respectives formant un quadrilatère déformable, le dispositif de réglage de la profondeur de semis (8) et le dispositif de réglage du terrage (9) agissant sur ladite structure de liaison (5), dans lequel ladite structure de liaison (5) pivote autour d'une articulation transversale (6) au moyen d'un basculeur (7) permettant le dégagement de ladite barre de semis (4) du sol et que les dispositifs de réglage (8, 9) et ledit basculeur (7) sont implantés de manière à s'étendre dans l'encombrement de ladite structure de liaison (5) et **caractérisé en ce que** lorsque ledit basculeur (7) pivote autour d'une articulation transversale (6) pour le dégagement de ladite barre de semis (4) du sol, les réglages dudit dispositif de réglage de la profondeur de semis (8) et dudit dispositif de réglage du terrage (9) ne sont pas modifiés.

2. Semoir selon la revendication 1, ***caractérisé en ce que*** les dispositifs de réglage (8, 9) et ledit basculeur (7) s'étendent entre deux plans verticaux passant par lesdites articulations (18, 19, 20, 21) desdites bielles (10, 11).

3. Semoir selon la revendication 1 ou 2, ***caractérisé en ce que*** lesdits dispositifs de réglage (8, 9) sont constitués par un dispositif mécanique ou hydraulique.

4. Semoir selon l'une quelconque des revendications 1 à 3, ***caractérisé en ce que*** ladite structure de liaison (5) présente un bras incurvé (17) lié à l'organe de référence (3) via ladite articulation transversale (6).

5. Semoir selon la revendication 4, ***caractérisé en ce que*** lors du travail, ledit bras incurvé (17) est en butée contre l'organe de référence (3).

6. Semoir selon la revendication 4 ou 5, ***caractérisé en ce que*** ledit dispositif de réglage du terrage (9) s'étend entre ladite troisième articulation (20) et une cinquième articulation (22) dudit bras incurvé (17).

7. Semoir selon la revendication 6, ***caractérisé en ce que*** ladite cinquième articulation (22) s'étend au-dessus de ladite bielle supérieure (10) et sensiblement à mi-distance entre ladite première articulation (18) et ladite deuxième articulation (19) de ladite bielle supérieure (10).

8. Semoir selon l'une quelconque des revendications 1 à 7, ***caractérisé en ce que*** ladite deuxième articulation (19) et ladite quatrième articulation (21) sont alignées avec ladite articulation transversale (6).

9. Semoir selon l'une quelconque des revendications 1 à 8, ***caractérisé en ce que*** ledit basculeur (7) s'étend entre ladite deuxième articulation (19) et une sixième articulation (23) disposée en dessous de ladite bielle inférieure (11).

10. Machine agricole combinée de travail du sol et de semis comportant une machine de travail du sol et un semoir selon l'une quelconque des revendications 1 à 9.

## Patentansprüche

1. Drillmaschine (1) mit einem Gestell (2), einem Bezugselement (3) und einer Säschiene (4), die mittels mindestens einer Verbindungsvorrichtung (5) mit dem Bezugselement (3) verbunden ist, welche Verbindungsvorrichtung (5) ein Oberlenker (10) mit einem ersten und einem zweiten Gelenk (18, 19) und ein Unterlenker (11) mit einem dritten und einem vierten Gelenk (20, 21) aufweist, wobei die entsprechende Gelenke (18, 19, 20, 21) ein verformbares Viereck bilden, wobei die Saattiefeeinstellvorrichtung (8) und die Bodenverfestigungeinstellvorrichtung (9) auf die Verbindungsvorrichtung (5) wirken, in welcher die Verbindungsvorrichtung (5) mittels einer Kippvorrichtung (7) um ein Quergelenk (6) schwenkt, welche die Bodenfreiheit der Säschiene (4) gestattet und, dass die Einstellvorrichtungen (8, 9) und die Kippvorrichtung (7) derart angebracht sind, dass sie sich innerhalb des Platzbedarfs der Verbindungsvorrichtung (5) erstrecken und ***dadurch gekennzeichnet,* dass** wenn die Kippvorrichtung (7) zur Bodenfreiheit der Säschiene (4) um ein Quergelenk (6) schwenkt, die Einstellungen der Saattiefeeinstellvorrichtung (8) und der Bodenverfestigungeinstellvorrichtung (9) nicht abgeändert werden.

2. Drillmaschine nach Anspruch 1, ***dadurch gekennzeichnet,* dass** die Einstellvorrichtungen (8, 9) und die Kippvorrichtung (7) sich zwischen zwei durch die Gelenke (18, 19, 20, 21) der Lenker (10, 11) verlaufende Vertikalebenen erstrecken.

3. Drillmaschine nach Anspruch 1 oder 2, ***dadurch gekennzeichnet,* dass** die Einstellvorrichtungen (8, 9) aus einer mechanischen oder einer hydraulischen Vorrichtung gebildet sind.

4. Drillmaschine nach irgend einem der Ansprüche 1 bis 3, ***dadurch gekennzeichnet,* dass** die Verbindungsvorrichtung (5) ein mit dem Bezugselement (3) mittels dem Quergelenk (6) verbundener gekrümmter Arm (17) aufweist.

5. Drillmaschine nach Anpruch 4, ***dadurch gekennzeichnet,* dass** der gekrümmte Arm (17) sich bei der Arbeit an dem Bezugselement (3) abstützt.

6. Drillmaschine nach Anspruch 4 oder 5, ***dadurch gekennzeichnet,* dass** sich die Bodenverfestigungeinstellvorrichtung (9) zwischen dem dritten Gelenk (20) und einem fünften Gelenk (22) des gekrümmten Armes (17) erstreckt.

7. Drillmaschine nach Anspruch 6, ***dadurch gekennzeichnet,* dass** sich das fünfte Gelenk (22) über dem Oberlenker (10) und im wesentlichen in der Mitte zwischen dem ersten Gelenk (18) und dem zweiten Gelenk (19) des Oberlenkers (10) erstreckt.

8. Drillmaschine nach irgend einem der Ansprüche 1 bis 7, ***dadurch gekennzeichnet,* dass** das zweite Gelenk (19) und das vierte Gelenk (21) mit dem Quergelenk (6) in einer Reihe stehen.

9. Drillmaschine nach irgend einem der Ansprüche 1 bis 8, ***dadurch gekennzeichnet,* dass** sich die Kippvorrichtung (7) zwischen dem zweiten Gelenk (19) und einem sich unter dem Unterlenker (11) angebrachten sechsten Gelenk (23) erstreckt.

10. Gerätekombination zur Bodenbearbeitung und zur Aussaat mit einer Bodenbearbeitungsmaschine und einer Drillmaschine nach irgend einem der Ansprüche 1 bis 9.

## Claims

1. Seeder (1) comprising a chassis (2), a reference element (3) and a coulter bar (4) connected to the reference element (3) by means of at least one connecting structure (5) provided with an upper rod (10) with a first and a second articulation (18, 19) and a lower rod (11) with a third and a fourth articulation (20, 21), the said respective articulations (18, 19, 20, 21) forming a deformable quadrilateral, the seeding depth adjustment device (8) and the soil-compacting adjustment device (9) acting on the said connecting structure (5), within which the said connecting structure (5) swivels around a transverse articulation (6) by means of a rocker (7) enabling ground clearance of the said coulter bar (4) and that the adjustment devices (8, 9) and the said rocker (7) are implemented so as to extend within the space occupied by the said connecting structure (5) and ***characterized in that*** when the said rocker (7) swivels around a transverse articulation (6) to obtain the ground clearance of the said coulter bar (4), the adjustments of the said seeding depth adjustment device (8) and the said soil-compacting adjustment device (9) remain unchanged.

2. Seeder according to claim 1, ***characterized in that*** the adjustment devices (8, 9) and the said rocker (7) extend between two vertical planes passing through the said articulations (18, 19, 20, 21) of the said rods (10, 11).

3. Seeder according to claim 1 or 2, ***characterized in that*** the said adjustment devices (8, 9) are formed by a mechanical or a hydraulic device.

4. Seeder according to anyone of claims 1 to 3, ***characterized in that*** the said connecting structure (5) has a curved arm (17) connected to the reference element (3) via the said transverse articulation (6).

5. Seeder according to claim 4, ***characterized in that*** during work, the said curved arm (17) abuts against the reference element (3).

6. Seeder according to claim 4 or 5, ***characterized in that*** the said soil-compacting adjustment device (9) extends between the said third articulation (20) and a fifth articulation (22) of the said curved arm (17).

7. Seeder according to claim 6, ***characterized in that*** the fifth articulation (22) extends above the said upper rod (10) and substantially at mid-distance between the said first articulation (18) and the said second articulation (19) of the said upper rod (10).

8. Seeder according to anyone of claims 1 to 7, ***characterized in that*** the said second articulation (19) and the said fourth articulation (21) are aligned with the said transverse articulation (6).

9. Seeder according to anyone of claims 1 to 8, ***characterized in that*** the said rocker (7) extends between the said second articulation (19) and a sixth articulation (23) arranged below the said lower rod (11).

10. Agricultural combined soil-working and seeding machine comprising a soil-working machine and a seeder according to anyone of claims 1 to 9.
